# EUROPEAN PATENT SPECIFICATION

(11) **EP 3 979 560 B1**
(45) Date of publication and mention of the grant of the patent: **17.07.2024**
(21) Application number: 20818931.6
(22) Date of filing: 18.04.2020
(51) Int. Cl.: H04L 12/18, H04L 51/066

(54) **METHOD AND APPARATUS FOR IMPLEMENTING CONFERENCE CONTROL, AND SERVER**
VERFAHREN UND VORRICHTUNG ZUR UMSETZUNG DER KONFERENZSTEUERUNG UND SERVER
PROCÉDÉ ET APPAREIL POUR METTRE EN OEUVRE LE COMMANDE DE CONFÉRENCE, ET SERVEUR

(30) Priority: 04.06.2019 CN 201910479990
(43) Date of publication of application: 06.04.2022
(73) Proprietor: ZTE Corporation, Shenzhen, Guangdong 518057 (CN)
(72) Inventor: WEI, Xuesong, Shenzhen, Guangdong 518057 (CN); LI, Fu, Shenzhen, Guangdong 518057 (CN)
(74) Representative: Gevers Patents
(86) International application number: PCT/CN2020/085482
(87) International publication number: WO 2020/244317

(56) References cited:
- EP-A1- 2 418 847
- WO-A1-2011/015136
- CN-A- 101 159 788
- CN-A- 103 824 559
- CN-A- 105 991 964
- JP-A- H02 265 346
- JP-A- H09 281 991
- US-A- 5 916 302
- US-A1- 2014 142 950

## Description

### TECHNICAL FIELD

The present disclosure relates but not limited to a method and apparatus for implementing conference control, a conference application server, a media server and a computer-readable storage medium.

### BACKGROUND

A Rich communication suite (RCS) service refers to integration of initial three main entrances that conversation, message and contacts in a mobile phone, integrate directly with the mobile phone in terms of an operator. In this way, the initial three main entrances became new conversation, new message and new contacts. Herein, multi-party conversation and multi-party visual conversation are the most important services in RCS services.

A multi-party conversation service, especially a multi-party conversation service implemented through a conference, generally includes a conference control operation, that is, the conference control operation may be performed before and during the conference. Especially, a conference control operation during the conference includes adding a member, kicking out a member, muting a member, unmuting a member, recording by a member. These are performed in a mobile application (i.e., application or APP) or on an interface of the 5^{th} version of Hypertext Markup Language (i.e., HRML5 or H5). Generally, the conference control operation is performed by a mobile phone APP or an H5 client that transmits a hypertext transfer protocol (HTTP) request to a server.

However, for a non-voice over long term evolution (non-VoLTE) mobile phone user, this conference control operation would cause following problem. That is, in a case where the user does not access to wireless fidelity (i.e., wireless local area network based on the IEEE802.11 standard or WiFi), the user would be disconnected from the Internet after the user is put through to the Internet. In this case, no conference control operation may be performed. In addition, in a multi-party audio and visual conversation service of VoLTE, there is no APP user interface for implementing conference control operation. Besides, even if data network is available to the user and the conference control operation may be performed, an audio conversation has to be switched to a conference control interface if the user needs to perform a video conference control operation during the conversation. In practice, user experience is not coherent.

(EP2418847A1) provides a method, terminal, and system of image-based video. The method includes: sending a control request message to a network-side device; dynamically displaying image information according to a control message fed back by the network-side device; editing an image according to the image information to complete video conference control; the network-side device includes a multi-point conference control apparatus, the conference control includes voice-controlled switching.

(US2014142950A1) provides a system of interleaving voice commands for electronic meetings, including: receiving a command precursor associated with delivery of a voice command associated with an electronic meeting; receiving an audio signal including the voice command; identifying a portion of the audio signal as representing the voice command based upon, at least in part, receiving the command precursor; causing execution of the interpreted voice command. The execution of the interpreted voice command includes translating a portion of the audio signal following the voice command into text.

### SUMMARY

In one aspect, the present disclosure provides a method for implementing conference control, which is defined in independent claim 1.

In another aspect, the present disclosure provides a method for implementing conference control, which is defined in independent claim 8.

In still another aspect, the present disclosure provides a conference application server, which is defined in independent claim 11.

In still another aspect, the present disclosure provides a media server, which is defined in independent claim 12.

In still another aspect, the present disclosure provides a computer-readable storage medium, which is defined in independent claim 13.

Further advantageous embodiments of the present disclosure are indicated in the dependent claims.

It is to be understood that both the forgoing general description and the following detailed description are exemplary only, and are not restrictive of the present disclosure.

### BRIEF DESCRIPTION OF THE DRAWINGS

FIG. 1 shows a flowchart of a method for implementing conference control according to an embodiment of the present disclosure.
FIG. 2 shows a flowchart of a method for implementing conference control according to an embodiment of the present disclosure (applicable to a conference application server).
FIG. 3 shows a flowchart of a method for implementing conference control according to an embodiment of the present disclosure (applicable to a media server).
FIG. 4 shows a flowchart of a method for implementing conference control according to a practical use embodiment of the present disclosure.
FIG. 5 shows a flowchart of a speech operation according to a practical use embodiment of the present disclosure.
FIG. 6 shows a flowchart of speech matching recognition according to a practical use embodiment of the present disclosure.
FIG. 7 shows a schematic diagram of configuration of an apparatus for implementing conference control according to an embodiment of the present disclosure (applicable to the conference application server).
FIG. 8 shows a schematic diagram of configuration of an apparatus for implementing conference control according to an embodiment of the present disclosure (applicable to the media server).
FIG. 9 shows a schematic diagram of configuration of a conference application server according to an embodiment of the present disclosure.

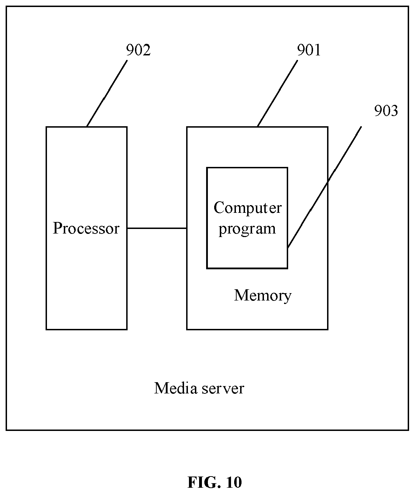

FIG. 10 shows a schematic diagram of configuration of the media server according to an embodiment of the present disclosure.

### DETAILED DESCRIPTION

Hereinafter, the present disclosure will be described in detail with reference to the accompanying drawings.

Operations shown in flowcharts among the drawings may be performed in a computer system under a group of computer executable instructions. In addition, the flowcharts show logic sequences, but the operations shown or described may be performed in sequences different from the sequences shown in the flowcharts.

The present disclosure provides a method for implementing conference control. This method enables conference control to be implemented through speech interaction in a conference service of a mobile terminal, and is particularly suitable for a speech conference service. In this scenario, the conference control may be implemented through speaking, which can prevent a case where there is no conference control interface operation, or where the conference control operation cannot be performed or switching a conference control conversation is interrupted in response to a disconnected service network as in VoLTE. Meanwhile, this also can improve user experience.

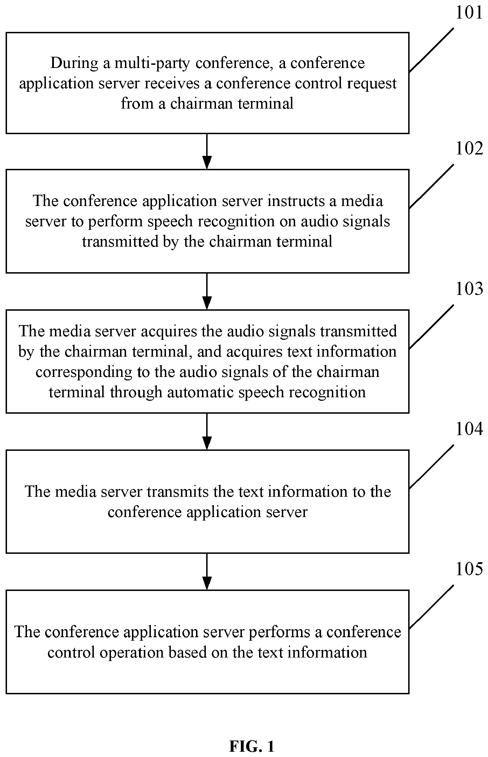

FIG. 1 shows a method for implementing conference control according to an embodiment of the present disclosure, including following operations.

In 101, during a multi-party conference, a conference application server receives a conference control request from a chairman terminal.

Herein, in the multi-party conference, nobody but the chairman terminal may perform a conference control operation.

In an example, the conference control request is a preset key message.

For example, it may be prescribed that during the multi-party conference, speech conference control starts once the chairman terminal randomly presses a key. It may further be prescribed that the speech conference control starts once a certain key like the "*" key is pressed.

In order to receive the preset key message, in an example, before 101, the conference application server performs a tone playing and digit collecting operation on the chairman terminal.

In an example, that the conference application server performs the tone playing and digit collecting operation on the chairman terminal includes: playing a null tone to the chairman terminal and identifying the preset key message.

The tone playing and digit collecting operation may be performed on the chairman terminal after the conference is established. The tone playing and digit collecting operation is mainly to achieve the digit collecting operation on the user's keys. Therefore, a voice notification played is a null tone that cannot be heard by the user. A digit collecting bit may be set with a length of 1 bit. An exceeding time for the tone playing and digit collecting operation may be especially long and may be set as a day. Therefore, the digit collecting operation would continue in the conference. In this way, while a chairman is talking, if the speech conference control is to be performed, the "*" may be pressed to notify the conference application server of starting a speech conference control period. A system performs conversion and recognition on the speech, and performs recognition on a speech conference control instruction after the "*" is pressed. This is a relatively safe operation to the user. In comparison, if the user's conversation is recorded, forwarded and recognized during a whole process of the conference, the whole process is monitored to the user, there is a risk of exposure the user's privacy. The conference control after the key is pressed concerns only conference control instructions that do not involve the user's conversation privacy and thus is much safer.

In an example, when the conference application server receives the preset key message, a system tone playing operation may be performed. For example, a "dong" may be played. This denotes reception of a request, and the speech conference control period for user speech collection starts.

In 102, the conference application server instructs a media server to perform speech recognition on audio signals transmitted by the chairman terminal.

Herein, the conference application server may transmit an info message to the media server, and instruct to perform speech recognition on the chairman terminal.

Herein, there may be two implementation schemes for performing speech recognition on the chairman terminal.

A scheme 1 is to perform direct speech recognition on the chairman terminal.

The direct speech recognition on the chairman terminal is technically easy to be implemented. However, because the chairman is still in the conference room, the speech conference control would be heard by other members in the conference room, so the user experience is not very well.

A scheme 2 is that the chairman is separated from an initial conference room, so that the other members would not hear the chairman's speech conference control operation. This scheme not only protects the chairman's operation privacy, but also provides no interruption to an initial conference.

There are two implementation modes in the implementation process of the scheme 2.

Mode 1: separating the chairman's voice, this is equivalent to a logic separation. Firstly, the chairman terminal is muted so that the chairman's speech is not included in the conference room and the other members in the conference room can not hear the chairman's speech. Then the speech recognition is performed on the chairman. In this way, speech recognition on the chairman is implemented while the initial conference room is not impacted.

In this mode, before 102, the conference application server instructs the media server to mute the chairman terminal. The media server mutes the chairman terminal based on an instruction of the conference application server.

Mode 2: a sub-conference room is established and the chairman is transferred into the sub-conference room from the initial conference room. Speech recognition is performed on audio signals in the sub-conference room. If the tone playing operation is to be performed, the tone playing operation may be only performed in the sub-conference room, because there is the only member of the chairman terminal in the sub-conference room. In this way, two sub-conference rooms are physically separated, and there would be no mutual interference in terms of speech conference control.

In this mode, before 102, the conference application server establishes the sub-conference room, and transfers the chairman terminal from a main conference room of the multi-party conference to the sub-conference room. In 102, the conference application server instructs the media server to perform speech recognition on the audio signals in the sub-conference room.

In this operation, the chairman terminal may start to perform speech conference control through a conference control instruction like "mute 13770335897".

In 103, the media server acquires the audio signals transmitted by the chairman terminal, and acquires text information corresponding to the audio signals of the chairman terminal through automatic speech recognition.

In an example, the media server acquires the audio signals transmitted by the chairman terminal, and transfers the audio signals to an automatic speech recognition device. The media server acquires from the automatic speech recognition device the text information corresponding to the audio signals.

Herein, the media server may forward the audio signals transmitted by the chairman terminal, call a speech recognition system interface (e.g., a speech recognition system by iFLY TEK) of a public cloud to perform the automatic speech recognition.

In 104, the media server transmits the text information to the conference application server.

Herein, the media server may inform the conference application server of the text information through an info response event.

In 105, the conference application server performs a conference control operation based on the text information.

In an example, the conference application server performs text matching and identifying on the text information, and performs the conference control operation on members in the multi-party conference according to an identified content when the text matching succeeds.

Herein, the conference application server may perform keyword recognition on the text information. For example, please add 12313981988, or add 12369856986 to the conference. Recognized keywords include keywords for adding a member such as adding/pulling in/inviting xxxxxx, optional words such as {conference} and {enter}, as well as other conference controls such as kicking out a member, muting a member, unmuting a member, recording. These all have corresponding semantic recognition matches. When a match succeeds, a conference control operation is performed. After the conference control operation succeeds, there may be a speech prompt of "request succeeds". In case the recognition fails, "recognition fails" may be played. In case the conference control fails, a tone playing operation like "request fails" may be played.

In addition, a certain error redundancy to speech recognition is allowed. When a recognized keyword is a keyword of a certain instruction, a conference control operation instruction period starts. A conference control operation is performed on a certain member. After the operation is completed, an operation result tone is played to the chairman terminal. In response to the chairman not confirming, a default process is performed to execute an operation request by the chairman terminal. In response to a failed request, the initial conference room is returned to.

After the semantic recognition, a recognized keyword like "you request to add 1235689785; press 1 to cancel" may be played through interactive voice response (IVR). After the operation is completed, the conference would be directly returned to. In response to a video conference, the media server may directly compose a recognized speech text and add the recognized speech text to a video interface viewed by the user. This would result in a better user experience.

In an example, the conference application server performs text matching and identifying on the text information based on a pre-acquired contact list of the chairman terminal.

In order to facilitate the user's speech operation, it may be complicated if the chairman terminal performs conference control operation on the members by using mobile phone numbers during operation. The chairman may guide in the user's contact list into the conference application server in advance to perform direct speech control on names in the contact list. This is more convenient than direct operation on the mobile phone numbers. In this way, in a last text recognition process, the contact list of the chairman terminal is searched and the operation is performed on a corresponding mobile phone number.

The conference control operation is implemented through speech, which can prevent a case where there is no conference control interface operation, or where the conference control operation cannot be performed or switching a conference control conversation is interrupted in response to a disconnected service network in VoLTE, and thereby can improve user experience and make the multi-party conference more intellectualized.

The conference application server and the media server are described respectively in following.

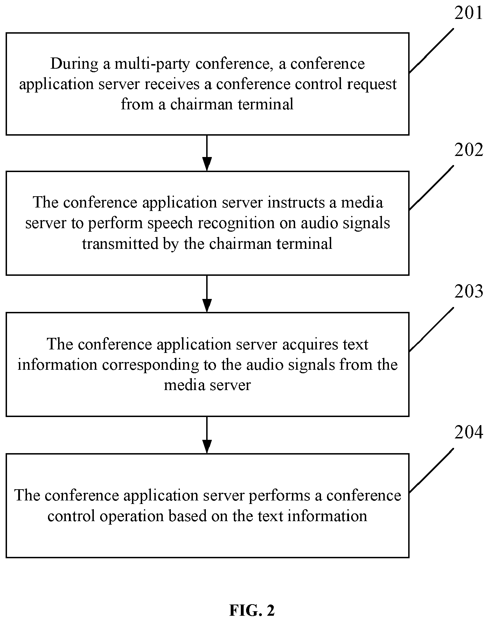

FIG. 2 shows a method for implementing conference control according to the present disclosure. The method for implementing conference control is applicable to the conference application server, including following operations.

In 201, during a multi-party conference, a conference application server receives a conference control request from a chairman terminal.

Herein, in the multi-party conference, nobody but the chairman terminal may perform a conference control operation.

In an example, the conference control request is a preset key message.

For example, it may be prescribed that during the multi-party conference, speech conference control starts once the chairman terminal randomly presses a key. It may further be prescribed that the speech conference control starts once a certain key like the "*" key is pressed.

In order to receive the preset key message, in an example, before 201, the conference application server performs a tone playing and digit collecting operation on the chairman terminal.

In an example, that the conference application server performs the tone playing and digit collecting operation on the chairman terminal includes: playing a null tone to the chairman terminal and identifying the preset key message.

The tone playing and digit collecting operation may be performed on the chairman terminal after the conference is established. The tone playing and digit collecting operation is mainly to achieve the digit collecting operation on the user's keys. Therefore, a speech notification played is a null tone that cannot be heard by the user. A digit collecting bit may be set with a length of 1 bit. An exceeding time for the tone playing and digit collecting operation may be especially long and may be set as a day. Therefore, the digit collecting operation would continue in the conference. In this way, while a chairman is talking, if the speech conference control is to be performed, the "*" may be pressed to notify the conference application server of starting a speech conference control period. A system performs conversion and recognition on the speech, and performs recognition on a speech conference control instruction after the "*" is pressed. This is a relatively safe operation to the user. In comparison, if the user's conversation is recorded, forwarded and recognized during a whole process of the conference, the whole process is monitored to the user, there is a risk of exposure of the user's privacy. The conference control after the key is pressed concerns only conference control instructions that do not involve the user's conversation privacy and thus is much safer.

In an example, when the conference application server receives the preset key message, a system tone playing operation may be performed. For example, a "dong" may be played. This denotes reception of a request, and the speech conference control period for user speech collection starts.

In 202, the conference application server instructs a media server to perform speech recognition on audio signals transmitted by the chairman terminal.

Herein, the conference application server may transmit an info message to the media server, and instruct to perform speech recognition on the chairman terminal.

Herein, there may be two implementation schemes for performing speech recognition on the chairman terminal.

A scheme 1 is to perform direct speech recognition on the chairman terminal.

The direct speech recognition on the chairman terminal is technically easy to be implemented. However, because the chairman is in a conference room, the speech conference control would be heard by other members in the conference room so the user experience is not very well.

A scheme 2 is that the chairman is separated from the initial conference room, so that the other members would not hear the chairman's speech conference control operation. This scheme not only protects the chairman's operation privacy, but also provides no interruption to the initial conference.

There are two implementation modes in the implementation process of the scheme 2.

Mode 1: separating the chairman's voice, this is equivalent to a logic separation. Firstly, the chairman terminal is muted so that the chairman's speech is not included in the conference room and the other members in the conference room can not hear the chairman's speech. Then the speech recognition is performed on the chairman. In this way, speech recognition on the chairman is implemented while the initial conference room is not impacted.

In this mode, before 202, the conference application server instructs the media server to mute the chairman terminal.

Mode 2, a sub-conference room is established and the chairman is transferred into the sub-conference room from the initial conference room. Speech recognition is performed on audio signals in the sub-conference room. If the tone playing operation is to be performed, the tone playing operation may be only performed in the sub-conference room, because there is the only member of the chairman terminal in the sub-conference room. In this way, two sub-conference rooms are physically separated, and there would be no mutual interference in terms of speech conference control.

In this mode, before 202, the conference application server establishes the sub-conference room, and transfers the chairman terminal from a main conference room of the multi-party conference to the sub-conference room. In 202, the conference application server instructs the media server to perform speech recognition on the audio signals in the sub-conference room.

In this operation, the chairman terminal may start to perform speech conference control through a conference control instruction like "mute 13770335897".

In 203, the conference application server acquires text information corresponding to the audio signals from the media server.

Herein, the conference application server receives a response of info response event from the media server, and the response carries the text information.

In 204, the conference application server performs a conference control operation based on the text information.

In an example, the conference application server performs text matching and identifying on the text information, and performs the conference control operation on members in the multi-party conference according to an identified content when the text matching succeeds.

Herein, the conference application server may perform keyword recognition on the text information. For example, please add 12313981988, or add 12369856986 to the conference. Recognized keywords include keywords for adding a member such as adding/pulling in/inviting xxxxxx, optional words such as {conference} and {enter}, as well as other conference controls such as kicking out a member, muting a member, unmuting a member, recording. These all have corresponding semantic recognition matches. When a match succeeds, a conference control operation is performed. After the conference control operation succeeds, there may be a speech prompt of "request succeeds". In case the recognition fails, "recognition fails" may be played. In case the conference control fails, a tone playing operation like "request fails" may be played.

In addition, a certain error redundancy to speech recognition is allowed. When a recognized keyword is a keyword of a certain instruction, conference control operation instruction period starts. A conference control operation is performed on a certain member. After the operation is completed, an operation result tone is played to the chairman terminal. In response to the chairman not confirming, a default process is performed to execute an operation request by the chairman terminal. In response to a failed request, the initial conference room is returned to.

After the semantic recognition, a recognized keyword like "you request to add 1235689785; press 1 to cancel" may be played through interactive voice response (IVR). After the operation is completed, the conference would be directly returned to. In response to a video conference, the media server may directly compose a recognized speech text and add the recognized speech text to a video interface viewed by the user. This would result in a better user experience.

In an example, the conference application server performs text matching and identifying on the text information based on a pre-acquired contact list of the chairman terminal.

In order to facilitate the user's speech operation, it may be complicated if the chairman terminal performs conference control operation on the members by using mobile phone numbers during operation. The chairman may guide in the user's contact list into the conference application server in advance to perform direct speech control on names in the contact list. This is more convenient than direct operation on the mobile phone numbers. In this way, in a last text recognition process, the contact list of the chairman terminal is searched and the operation is performed on a corresponding mobile phone number.

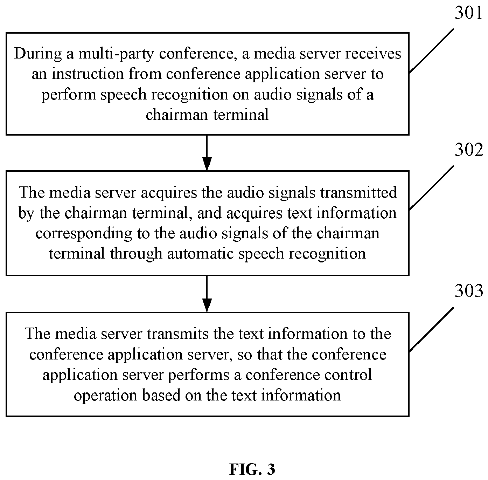

FIG. 3 shows a method for implementing conference control according to an embodiment of the present disclosure. The method for implementing conference control is applicable to the media server, including following operations.

In 301, during a multi-party conference, a media server receives an instruction from a conference application server to perform speech recognition on audio signals of a chairman terminal.

Herein, the media server may be acknowledged with the instruction according to the info message transmitted by the conference application server.

Herein, there may be two implementation schemes for performing speech recognition on the chairman terminal.

A scheme 1 is to perform direct speech recognition on the chairman terminal.

The direct speech recognition on the chairman terminal is technically easy to be implemented. However, because the chairman is still in a conference room, the speech conference control would be heard by other members in the conference room, so the user experience is not very well.

A scheme 2 is that the chairman is separated from the initial conference room, so that the other members would not hear the chairman's speech conference control operation. This scheme not only protects the chairman's operation privacy, but also provides no interruption to the initial conference.

There are two implementation modes in the implementation process of the scheme 2.

Mode 1: separating the chairman's voice, this is equivalent to a logic separation. Firstly, the chairman terminal is muted so that the chairman's speech is not included in the conference room and the other members in the conference room cannot hear the chairman's speech. Then the speech recognition is performed on the chairman. In this way, speech recognition on the chairman is implemented while the initial conference room is not impacted.

In this mode, before 301, as instructed by the conference application server, the media server mutes the chairman terminal.

Mode 2: a sub-conference room is established and the chairman is transferred into the sub-conference room from the initial conference room. Speech recognition is performed on audio signals in the sub-conference room. If the tone playing operation is to be performed, the tone playing operation may be only performed in the sub-conference room, because there is the only member of the chairman terminal in the sub-conference room. In this way, two sub-conference rooms are physically separated, and there would be no mutual interference in terms of speech conference control.

In this mode, in 301, the media server receives an instruction from the conference application server to perform speech recognition on audio signals of a sub-conference room of the multi-party conference. Herein, the chairman terminal is in the sub-conference room.

In this operation, the chairman terminal may start to perform speech conference control through a conference control instruction like "mute 13770335897".

In 302, the media server acquires the audio signals transmitted by the chairman terminal, and acquires text information corresponding to the audio signals of the chairman terminal through automatic speech recognition.

In an example, the media server acquires the audio signals transmitted by the chairman terminal, and transfers the audio signals to an automatic speech recognition device. The media server acquires from the automatic speech recognition device the text information corresponding to the audio signals.

Herein, the media server may forward the audio signals transmitted by the chairman terminal, call a speech recognition system interface (e.g., a speech recognition system by iFLY TEK) of a public cloud to perform the automatic speech recognition.

In 303, the media server transmits the text information to the conference application server, so that the conference application server performs a conference control operation base on the text information.

Herein, the media server may inform the conference application server of the text information through an info response event.

A practical use is provided in following.

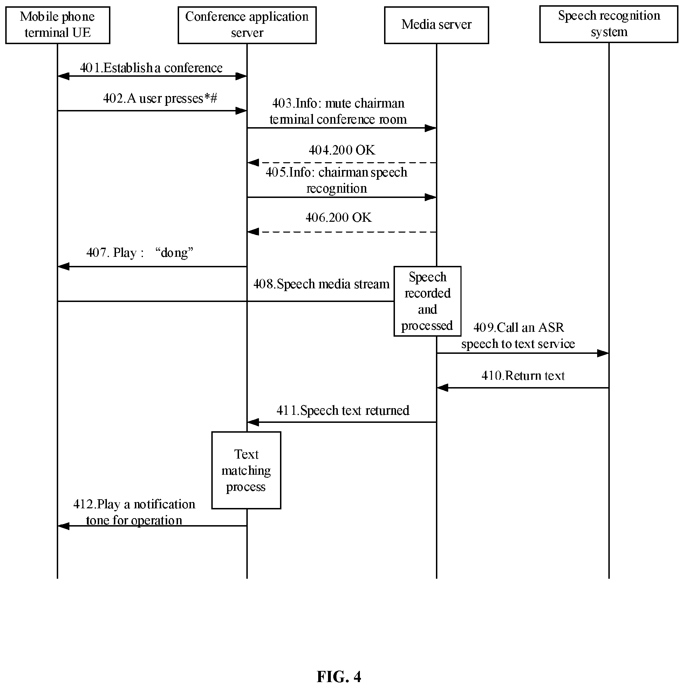

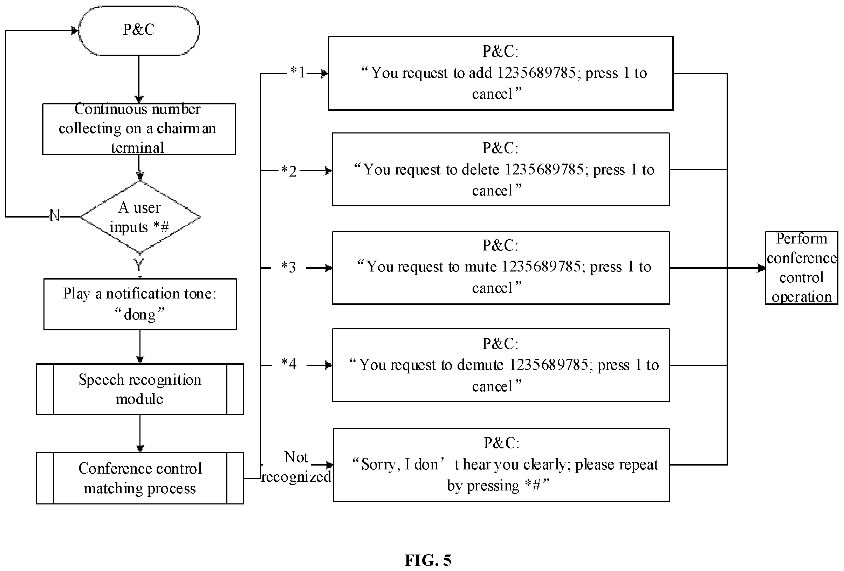

This mainly concerns a conference service based on RCS service architecture. A speech conference service in the circuit switching (CS) field is taken as an example (multi-party speech and video of VoLTE is also applicable), as shown in FIG. 4 and FIG. 5.

In 401, a user equipment (UE) receives an input by a user using a mobile phone APP or an H5 interface, initiates a conference call, and transmits an HTTP meeting request to a conference application server according to members participating in the conference. The conference application server receives the request. After being authenticated, the conference application server starts to create a conference in a callback manner. The conference application server calls the chairman terminal first and then each of the members. After the chairman's mobile phone is connected, if the chairman does not sign for a VoLTE service, data network of the chairman terminal will be disconnected, and the chairman terminal cannot perform a conference control operation on the mobile phone APP or H5 interface.

In 402, after the conference is established, the conference application server performs the tone playing and digit collecting (P&C) operation on the chairman terminal. A main purpose is to collect numbers. The tone played is a null tone (a tone number exists, but a tone file is a tiny blank tone) that the user can not hear or sense. When the chairman presses a key, a number will be received by the system. At this time, if the chairman chooses to control the conference by speech, the chairman first presses the "*" key (or a random key). The conference system recognizes that the user has pressed the "*" key based on reception of the "*" key and a chairman speech recognition and conference control process starts.

In 403, the conference application server transmits an info message to the media server, and instructs the media server to mute the chairman terminal.

In 404, the media server returns a 200OK confirmation message to the conference application server.

In 405, the conference application server transmits an info message to the media server, and instructs the media server to perform speech recognition on the chairman terminal.

In 406, the media server returns a 200OK confirmation message to the conference application server.

In 407, start of a reserved conference control is played to the chairman terminal. By playing a "dong", it indicates a speech conference control process starts. Users are waited for to input speech. After the system plays a prompt tone, speech recognition of the chairman terminal starts.

Herein, enter the speech recognition operation, which mainly including recording and recognizing an uplink speech of the chairman terminal. There are several schemes for these. Scheme 1 is simple, but user experience is relatively poor. Schemes 2 and 3 are much better. While performing recording recognition on the chairman terminal, a separation operation may be performed on the chairman terminal. In this way, a conference control speech does not enter an initial conference system to avoid interference to the conference room. These three schemes are detailed as follows.

In scheme 1, the uplink speech of the chairman terminal is directly recorded and recognized. The uplink speech of the chairman terminal is forwarded to an automatic speech recognition system to perform recognition conversion. A defect of this scheme is that the chairman's conference control operation speech can be heard by the other members. This is interference to the initial conference and an exposure of privacy.

In scheme 2, the conference application server first transmits to the media server a conference control operation of muting the chairman terminal, so that the speech of the chairman is not mixed in the conference and cannot be heard by the other members. Then the conference application server transmits an instruction to the media server to perform a speech recognition operation on the media server. In this way, the other members will not hear the chairman's conference control operation. This operation is easier. FIG. 4 shows the scheme 2.

In scheme 3, a two-conference room technology is applied and a sub-conference is established. After the sub-conference is established, the chairman terminal is first withdrawn from an initial main conference and then added to the sub-conference. In this way, the sub-conference includes only the chairman terminal. The chairman terminal performs recording and speech recognition operations on an entire conference of the sub-conference. After the conference control operation is completed, the chairman is withdrawn from the sub-conference and added to the initial main conference. In this way, the chairman's conference control operation and the initial conference are separated from each other and the initial conference is not impacted.

In 408, the chairman terminal transmits a speech media stream to the media server.

In 409, after receiving an uplink speech recognition request from the conference application server to the chairman terminal, the media server processes this audio signal input, starts recording and inputs a recorded audio signal file stream to the speech recognition system in an http manner.

In 410, the speech recognition system converts the speech to text. After recognition is completed, a recognition result is returned to the media server.

In 411, the media server returns a status report to the conference application server. The status report includes the result of the speech recognition and text of the recognized speech

In 412, after receiving the status report of speech processing, the conference application server starts recognizing words in the status report. A notification tone for operation is played upon completion of recognizing the words, and a corresponding conference control operation is performed.

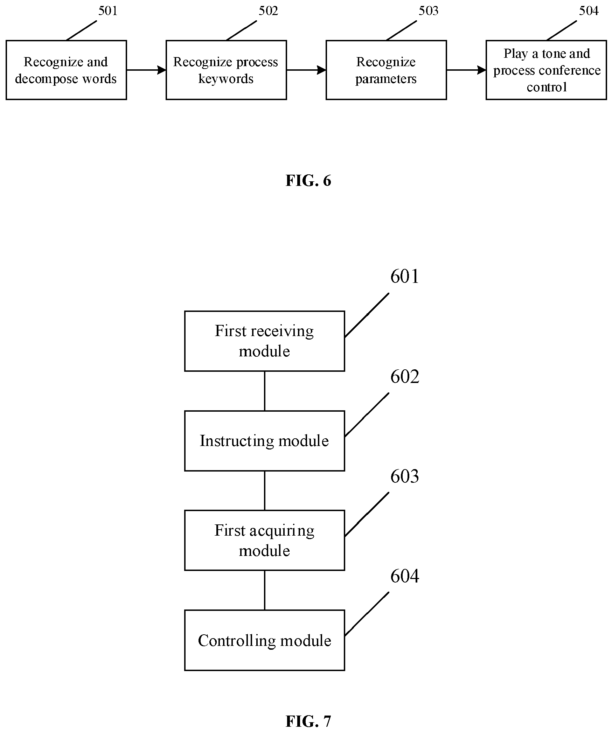

Herein, with reference to FIG. 6, matching and recognizing the words may include following operations.

In 501, words are recognized and decomposed.

In 502, process keywords are recognized. Herein, recognition may only be performed on conference control keywords like: adding to the process. Keywords such as "add", "join", "join in", "add to", "pull in", "drag in", "call in", "call" may be recognized. It may further be recognized which process of the conference control is referred to.

In 503, numbers to be operated on are recognized. For example, in a process of adding a person, a number to be recognized is a number to be added. Multiple numbers may be added at one time. There are spaces or files between numbers. Other conference control processes are similar to what is stated here.

In 504, after recognition on the conference control process and key information is completed, a tone is played and a conference control is processed.

For example, a confirmation message of "you request to add 1235689785; press 1 to cancel" is played to an operation terminal. After the confirmation message is played, in response to the user not cancelling, an operation process of adding a member is started. In response to the user pressing 1 after hearing the message, the operation process is canceled. In response to the user pressing 1 before completion of the request, the operation flow may be canceled. For example, while the user is being added and before the call is connected, the operation flow may be canceled and the call terminated. In response to a successful operation, a press on 1 to cancel is invalid.

Finally, for either an operation or canceling of the operation, the chairman terminal would be recovered from separation and recording would be canceled, and the chairman terminal would be re-added to the main conference room. Muting and recording recognition are canceled to the chairman terminal, and a conference process continues.

To sum up, the present disclosure provides performing conference control operation through speech in a multi-party conversation service among mobile terminals. This be applicable to a speech conference service in the CS field or a multi-party video speech service in a VoLTE service and is especially applicable to a scenario where there is no user operation conference control interface or where there is an interface yet it is not convenient to perform a conference control operation. After the user is connected, conference control is performed through the chairman terminal's natural speech to achieve such conference control operations like adding a member, kicking out a member and muting a member. This can improve user experience and make a multi-party conference more intellectualized, and also can prevent a case where interface operation cannot be performed in a conference control.

As shown in FIG. 7, the present disclosure further provides an apparatus for implementing conference control. The apparatus for implementing conference control is applicable to a conference application server. The apparatus for implementing conference control includes:
a first receiving module 601, configured to receive a conference control request from a chairman terminal during a multi-party conference;
an instructing module 602, configured to instruct a media server to perform speech recognition on audio signals transmitted by the chairman terminal;
a first acquiring module 603, configured to acquire text information corresponding to the audio signals from the media server; and
a controlling module 604, configured to perform a conference control operation based on the text information.

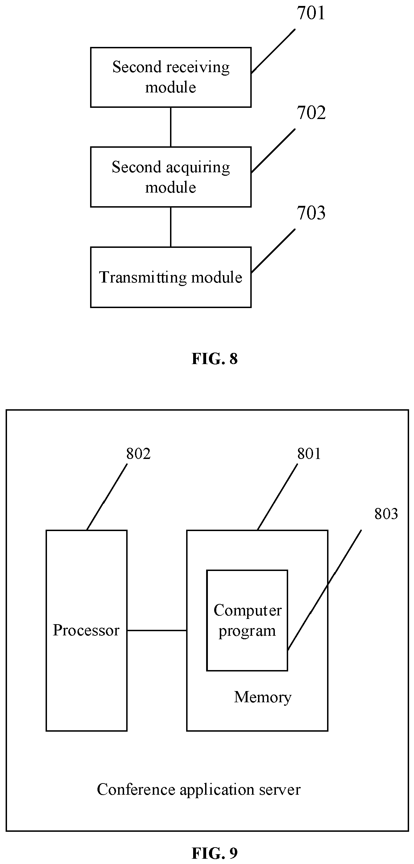

As shown in FIG. 8, the present disclosure further provides an apparatus for implementing conference control. The apparatus for implementing conference control is applicable to a media server. The apparatus for implementing conference control includes:
a second receiving module 701, configured to receive a conference application server's instruction of performing speech recognition on audio signals of a chairman terminal during a multi-party conference;
a second acquiring module 702, configured to acquire the audio signals transmitted by the chairman terminal, and acquire text information corresponding to the audio signals of the chairman terminal through automatic speech recognition; and
a transmitting module 703, configured to transmit the text information to the conference application server, so that the conference application server performs a conference control operation based on the text information.

As shown in FIG. 9, the present disclosure further provides a conference application server, including a memory 801, a processor 802 and a computer program 803 stored in the memory 801 and capable of running in the processor 802. When executing the program 803, the processor 802 implements the method for implementing conference control.

As shown in FIG. 1 the present disclosure further provides a media server, including a memory 901, a processor 902 and a computer program 903 stored in the memory 901 and capable of running in the processor 902. When executing the program 903, the processor 902 implements the method for implementing conference control.

The present disclosure further provides a computer-readable storage medium storing a computer-executable instruction for implementing the method for implementing conference control.

The storage medium may include but not limited to various media capable of storing computer programs, for example, a universal serial bus, a read-only memory (ROM), a random access memory (RAM), a mobile hard disc, a magnetic disc or an optical disc, or the like.

A person having ordinary skill in the art shall understand that all or some of the operations, functional modules/units in the system and apparatus disclosed in the above can be implemented as software, firmware, hardware, and appropriate combinations thereof. In the hardware implementation, the division between the functional modules/units mentioned described in the above does not necessarily correspond to division of physical components. For example, a physical component may have a plurality of functions, or one function or operation may be performed by several physical components. Some or all physical components can be implemented as software implemented by a processor like a digital signal processor, or a microprocessor, or as hardware, or as an integrated circuit like an application specific integrated circuit. Software as such may be distributed in a computer-readable medium. The computer-readable medium may include a computer storage medium (or a non-transitory medium) and a communication medium (or a transitory medium). As is known to a person having ordinary skill, the term of computer storage medium includes volatile or non-volatile, removable or irremovable media implemented in any method or technology for storing information (such as a computer readable instruction, a data structure, a program module or other data). The computer storage medium includes but not limited to an RAM, an ROM, an electrically erasable programmable read only memory (EEPROM), a flash memory or other storage technologies, a compact disc read-only memory (CD-ROM), a digital versatile disc (DVD) or any other optical disc storage, magnetic cassette, magnetic tape, magnetic storage or any other magnetic storage apparatus, or another other medium that may be used for storing desired information and that is accessible by any other medium. In addition, as is well known to a person having ordinary skill in the art, a communication medium usually includes a computer readable instruction, a data structure, a program module, or other data in a modulated data signal such as carrier waves or other transmission mechanisms, and may include any information delivery medium.

## Claims

1. A method for implementing conference control, comprising:
a conference application server receiving (201) a conference control request from a chairman terminal during a multi-party conference;
the conference application server instructing (202) a media server to perform speech recognition on audio signals transmitted by the chairman terminal;
**characterized by**
the conference application server acquiring (203) text information corresponding to the audio signals from the media server; and
the conference application server performing (204) a conference control operation based on the text information;
wherein before the conference application server instructing (202) the media server to perform the speech recognition on the audio signals transmitted by the chairman terminal, the method further comprises:
the conference application server establishing a sub-conference room, and
the conference application server transferring the chairman terminal from a main conference room of the multi-party conference to the sub-conference room to separate the chairman terminal from the main conference room of the multi-party conference.

2. The method according to claim 1, wherein the conference control request is a preset key message, and before the conference application server receiving (201) the conference control request from the chairman terminal, the method further comprises:
the conference application server performing a tone playing and digit collecting operation on the chairman terminal.

3. The method according to claim 2, wherein the conference application server performing the tone playing and digit collecting operation on the chairman terminal comprises:
playing a null tone to the chairman terminal and identifying the preset key message.

4. The method according to claim 1, wherein before the conference application server instructing (202) the media server to perform the speech recognition on the audio signals transmitted by the chairman terminal, the method further comprises:
the conference application server instructing the media server to mute the chairman terminal.

5. The method according to claim 1, wherein the conference application server instructing (202) the media server to perform the speech recognition on the audio signals transmitted by the chairman terminal comprises:
the conference application server instructing the media server to perform the speech recognition on the audio signals in the sub-conference room.

6. The method according to claim 1, wherein the conference application server performing (204) the conference control operation based on the text information comprises:
the conference application server performing text matching and identifying on the text information, and performing the conference control operation on members in the multi-party conference based on an identified content when the text matching succeeds.

7. The method according to claim 6, wherein the conference application server performing the text matching and identifying on the text information comprises: the conference application server performing the text matching and identifying on the text information based on a pre-acquired contact list of the chairman terminal.

8. A method for implementing conference control, comprising:
a media server receiving (102) an instruction from a conference application server to perform speech recognition on audio signals of a chairman terminal during a multi-party conference; **characterized by** the media server acquiring (103) the audio signals transmitted by the chairman terminal, and acquiring text information corresponding to the audio signals of the chairman terminal through automatic speech recognition; and
the media server transmitting (104) the text information to the conference application server, so that the conference application server performs (105) a conference control operation based on the text information;
wherein the media server receiving (102) the instruction from the conference application server to perform the speech recognition on the audio signals of the chairman terminal comprises:
the media server receiving the instruction from the conference application server to perform speech recognition on audio signals of a sub-conference room of the multi-party conference, and the chairman terminal being in the sub-conference room, so as to separate the chairman terminal from main conference room of the multi-party conference.

9. The method according to claim 8, wherein the media server acquiring the audio signals transmitted by the chairman terminal and acquiring (103) the text information corresponding to the audio signals of the chairman terminal through the automatic speech recognition comprises:
the media server acquiring the audio signals transmitted by the chairman terminal, and transferring the audio signals to an automatic speech recognition device; and the media server acquiring from the automatic speech recognition device the text information corresponding to the audio signals.

10. The method according to claim 8, wherein before the media server receiving (102) the instruction from the conference application server to perform the speech recognition on the audio signals of the chairman terminal, the method further comprises:
the media server muting the chairman terminal, as instructed by the conference application server.

11. A conference application server, **characterized by** comprising:
a memory (801);
a processor (802); and
a computer program (803) stored in the memory (801) and capable of running in
the processor (802);
wherein when executing the program (803), the processor (802) implements the method for implementing conference control according to any one of claims 1-7.

12. A media server, **characterized by** comprising:
a memory (901);
a processor (902); and
a computer program (903) stored in the memory (901) and capable of running in the processor (902);
wherein when executing the program (903), the processor (902) implements the method for implementing conference control according to any one of claims 8-10.

13. A computer-readable storage medium, **characterized by** storing a computer-executable instruction for implementing the method for implementing conference control according to any one of claims 1-10.

## Patentansprüche

1. Verfahren zum Implementieren einer Konferenzsteuerung, umfassend, dass:
ein Konferenzanwendungsserver während einer Mehrparteienkonferenz eine Konferenzsteuerungsanforderung von einem Endgerät des Vorsitzenden empfängt (201);
der Konferenzanwendungsserver einen Medienserver anweist (202), eine Spracherkennung an vom Endgerät des Vorsitzenden übertragenen Audiosignalen durchzuführen; **dadurch gekennzeichnet, dass**
der Konferenzanwendungsserver Textinformationen erfasst (203), die den Audiosignalen von dem Medienserver entsprechen; und
der Konferenzanwendungsserver einen Konferenzsteuerungsvorgang basierend auf den Textinformationen durchführt (204);
wobei das Verfahren, bevor der Konferenzanwendungsserver den Medienserver anweist (202), die Spracherkennung an den vom Endgerät des Vorsitzenden übertragenen Audiosignalen durchzuführen, weiter umfasst, dass:
der Konferenzanwendungsserver einen Unterkonferenzraum einrichtet, und
der Konferenzanwendungsserver das Endgerät des Vorsitzenden von einem Hauptkonferenzraum der Mehrparteienkonferenz in den Unterkonferenzraum überträgt, um das Endgerät des Vorsitzenden von dem Hauptkonferenzraum der Mehrparteienkonferenz zu trennen.

2. Verfahren nach Anspruch 1, wobei die Konferenzsteuerungsanforderung eine voreingestellte Schlüsselnachricht ist, und das Verfahren, bevor der Konferenzanwendungsserver die Konferenzsteuerungsanforderung von dem Endgerät des Vorsitzenden empfängt (201), weiter umfasst, dass:
der Konferenzanwendungsserver auf dem Endgerät des Vorsitzenden einen Tonabspiel- und Digit-Erfassungsvorgang durchführt.

3. Verfahren nach Anspruch 2, wobei der Konferenzanwendungsserver, der den Tonabspiel- und Digit-Erfassungsvorgang auf dem Endgerät des Vorsitzenden durchführt, umfasst:
Abspielen eines Nulltons an das Endgerät des Vorsitzenden und Identifizieren der voreingestellten Schlüsselnachricht.

4. Verfahren nach Anspruch 1, wobei das Verfahren, bevor der Konferenzanwendungsserver den Medienserver anweist (202), die Spracherkennung an den vom Endgerät des Vorsitzenden übertragenen Audiosignalen durchzuführen, weiter umfasst, dass:
der Konferenzanwendungsserver den Medienserver anweist, das Endgerät des Vorsitzenden stumm zu schalten.

5. Verfahren nach Anspruch 1, wobei Anweisen (202) des Medienservers durch den Konferenzanwendungsserver, die Spracherkennung an den vom Endgerät des Vorsitzenden übertragenen Audiosignalen durchzuführen, umfasst, dass:
der Konferenzanwendungsserver den Medienserver anweist, die Spracherkennung an den Audiosignalen im Unterkonferenzraum durchzuführen.

6. Verfahren nach Anspruch 1, wobei Durchführen (204) des Konferenzsteuerungsvorgangs durch den Konferenzanwendungsserver basierend auf den Textinformationen umfasst, dass:
der Konferenzanwendungsserver einen Textabgleich und Identifizieren an den Textinformationen durchführt, und den Konferenzsteuerungsvorgang an Mitgliedern der Mehrparteienkonferenz basierend auf einem identifizierten Inhalt durchführt, wenn der Textabgleich erfolgreich verläuft.

7. Verfahren nach Anspruch 6, wobei das Durchführen des Textabgleichs und des Identifizierens an den Textinformationen durch den Konferenzanwendungsserver umfasst: Durchführen des Textabgleichs und des Identifizierens an den Textinformationen durch den Konferenzanwendungsserver basierend auf einer vorab erfassten Kontaktliste des Endgeräts des Vorsitzenden.

8. Verfahren zum Implementieren einer Konferenzsteuerung, umfassend, dass:
ein Medienserver eine Anweisung von einem Konferenzanwendungsserver empfängt (102), um während einer Mehrparteienkonferenz eine Spracherkennung an Audiosignalen eines Endgeräts des Vorsitzenden durchzuführen; **dadurch gekennzeichnet, dass**
der Medienserver die von dem Endgerät des Vorsitzenden übertragenen Audiosignale erfasst (103) und durch automatische Spracherkennung Textinformationen erfasst, die den Audiosignalen des Endgeräts des Vorsitzenden entsprechen; und
der Medienserver die Textinformationen an den Konferenzanwendungsserver überträgt (104), sodass der Konferenzanwendungsserver basierend auf den Textinformationen einen Konferenzsteuerungsvorgang durchführt (105);
wobei das Empfangen (102) der Anweisung vom Konferenzanwendungsserver durch den Medienserver, um die Spracherkennung an den Audiosignalen des Endgeräts des Vorsitzenden durchzuführen, umfasst, dass:
der Medienserver die Anweisung vom Konferenzanwendungsserver empfängt, um eine Spracherkennung an Audiosignalen eines Unterkonferenzraums der Mehrparteienkonferenz durchzuführen, und sich das Endgerät des Vorsitzenden im Unterkonferenzraum befindet, um das Endgerät des Vorsitzenden von dem Hauptkonferenzraum der Mehrparteienkonferenz zu trennen.

9. Verfahren nach Anspruch 8, wobei Erfassen der vom Endgerät des Vorsitzenden übertragenen Audiosignale durch den Medienserver und Erfassen (103) der den Audiosignalen des Endgeräts des Vorsitzenden entsprechenden Textinformationen durch die automatische Spracherkennung umfasst, dass:
der Medienserver die vom Endgerät des Vorsitzenden übertragenen Audiosignale erfasst und die Audiosignale an eine automatische Spracherkennungsvorrichtung überträgt; und der Medienserver von der automatischen Spracherkennungsvorrichtung die den Audiosignalen entsprechenden Textinformationen erfasst.

10. Verfahren nach Anspruch 8, wobei das Verfahren, bevor der Medienserver die Anweisung von dem Konferenzanwendungsserver empfängt (102), um die Spracherkennung an den Audiosignalen des Endgeräts des Vorsitzenden durchzuführen, weiter umfasst, dass:
der Medienserver das Endgerät des Vorsitzenden, wie vom Konferenzanwendungsserver angewiesen, stumm schaltet.

11. Konferenzanwendungsserver, **dadurch gekennzeichnet, dass** er umfasst:
einen Speicher (801);
einen Prozessor (802); und
ein Computerprogramm (803), das im Speicher (801) gespeichert ist und imstande ist, im Prozessor (802) ausgeführt zu werden;
wobei der Prozessor (802) beim Ausführen des Programms (803) das Verfahren zum Implementieren einer Konferenzsteuerung nach einem der Ansprüche 1-7 implementiert.

12. Medienserver, **dadurch gekennzeichnet, dass** er umfasst:
einen Speicher (901);
einen Prozessor (902); und
ein Computerprogramm (903), das im Speicher (901) gespeichert ist und imstande ist, im Prozessor (902) ausgeführt zu werden;
wobei der Prozessor (902) beim Ausführen des Programms (903) das Verfahren zum Implementieren einer Konferenzsteuerung nach einem der Ansprüche 8-10 implementiert.

13. Computerlesbares Speichermedium, **gekennzeichnet durch** Speichern einer computerausführbaren Anweisung zum Implementieren des Verfahrens zum Implementieren einer Konferenzsteuerung nach einem der Ansprüche 1-10.

## Revendications

1. Procédé pour mettre en oeuvre une commande de conférence, comprenant :
un serveur d'application de conférence recevant (201) une demande de commande de conférence en provenance d'un terminal de président pendant une conférence multipartite ;
le serveur d'application de conférence donnant comme instruction (202) à un serveur multimédia d'effectuer une reconnaissance vocale sur des signaux audio transmis par le terminal de président ; **caractérisé par**
le serveur d'application de conférence acquérant (203) des informations textuelles correspondant aux signaux audio provenant du serveur multimédia ; et
le serveur d'application de conférence effectuant (204) une opération de commande de conférence sur la base des informations textuelles ;
dans lequel, avant que le serveur d'application de conférence ne donne comme instruction (202) au serveur multimédia d'effectuer la reconnaissance vocale sur les signaux audio transmis par le terminal de président, le procédé comprend en outre :
le serveur d'application de conférence établissant une sous-salle de conférence, et
le serveur d'application de conférence transférant le terminal de président d'une salle de conférence principale de la conférence multipartite à la sous-salle de conférence pour séparer le terminal de président de la salle de conférence principale de la conférence multipartite.

2. Procédé selon la revendication 1, dans lequel la demande de commande de conférence est un message clé prédéfini et, avant que le serveur d'application de conférence ne reçoive (201) la demande de commande de conférence en provenance du terminal de président, le procédé comprend en outre :
le serveur d'application de conférence effectuant une opération de lecture de tonalité et de collecte de chiffres sur le terminal de président.

3. Procédé selon la revendication 2, dans lequel le serveur d'application de conférence effectuant l'opération de lecture de tonalité et de collecte de chiffres sur le terminal de président comprend :
l'émission d'une tonalité nulle au terminal de président et l'identification du message clé prédéfini.

4. Procédé selon la revendication 1, dans lequel, avant que le serveur d'application de conférence ne donne comme instruction (202) au serveur multimédia d'effectuer la reconnaissance vocale sur les signaux audio transmis par le terminal de président, le procédé comprend en outre :
le serveur d'application de conférence donnant comme instruction au serveur multimédia de couper le son du terminal de président.

5. Procédé selon la revendication 1, dans lequel le serveur d'application de conférence donnant comme instruction (202) au serveur multimédia d'effectuer la reconnaissance vocale sur les signaux audio transmis par le terminal de président comprend :
le serveur d'application de conférence donnant comme instruction au serveur multimédia d'effectuer la reconnaissance vocale sur les signaux audio dans la sous-salle de conférence.

6. Procédé selon la revendication 1, dans lequel le serveur d'application de conférence effectuant (204) l'opération de commande de conférence sur la base des informations textuelles comprend :
le serveur d'application de conférence effectuant une mise en correspondance de texte et une identification sur les informations textuelles et effectuant l'opération de commande de conférence sur des membres de la conférence multipartite sur la base d'un contenu identifié lorsque la mise en correspondance de texte réussit.

7. Procédé selon la revendication 6, dans lequel le serveur d'application de conférence effectuant la mise en correspondance de texte et l'identification sur les informations textuelles comprend : le serveur d'application de conférence effectuant la mise en correspondance de texte et l'identification sur les informations textuelles sur la base d'une liste de contacts pré-acquise du terminal de président.

8. Procédé pour mettre en oeuvre une commande de conférence, comprenant :
un serveur multimédia recevant (102) une instruction en provenance d'un serveur d'application de conférence pour effectuer une reconnaissance vocale sur des signaux audio d'un terminal de président pendant une conférence multipartite ; **caractérisé par**
le serveur multimédia acquérant (103) les signaux audio transmis par le terminal de président et acquérant des informations textuelles correspondant aux signaux audio du terminal de président au moyen d'une reconnaissance vocale automatique ; et
le serveur multimédia transmettant (104) les informations textuelles au serveur d'application de conférence de telle sorte que le serveur d'application de conférence effectue (105) une opération de commande de conférence sur la base des informations textuelles ;
dans lequel le serveur multimédia recevant (102) l'instruction en provenance du serveur d'application de conférence pour effectuer la reconnaissance vocale sur les signaux audio du terminal de président comprend :
le serveur multimédia recevant l'instruction en provenance du serveur d'application de conférence pour effectuer une reconnaissance vocale sur des signaux audio d'une sous-salle de conférence de la conférence multipartite, et le terminal de président se trouvant dans la sous-salle de conférence, de manière à séparer le terminal de président de la salle de conférence principale de la conférence multipartite.

9. Procédé selon la revendication 8, dans lequel le serveur multimédia acquérant les signaux audio transmis par le terminal de président et acquérant (103) les informations textuelles correspondant aux signaux audio du terminal de président au moyen de la reconnaissance vocale automatique comprend :
le serveur multimédia acquérant les signaux audio transmis par le terminal de président et transférant les signaux audio à un dispositif de reconnaissance vocale automatique ; et le serveur multimédia acquérant du dispositif de reconnaissance vocale automatique les informations textuelles correspondant aux signaux audio.

10. Procédé selon la revendication 8, dans lequel, avant que le serveur multimédia ne reçoive (102) l'instruction en provenance du serveur d'application de conférence pour effectuer la reconnaissance vocale sur les signaux audio du terminal de président, le procédé comprend en outre :
le serveur multimédia coupant le son du terminal de président, conformément à l'instruction donnée par le serveur d'application de conférence.

11. Serveur d'application de conférence, **caractérisé en ce qu'**il comprend :
une mémoire (801) ;
un processeur (802) ; et
un programme informatique (803) stocké dans la mémoire (801) et pouvant être exécuté dans le processeur (802) ;
dans lequel, lors de l'exécution du programme (803), le processeur (802) met en oeuvre le procédé pour mettre en oeuvre une commande de conférence selon l'une quelconque des revendications 1-7.

12. Serveur multimédia, **caractérisé en ce qu'**il comprend :
une mémoire (901) ;
un processeur (902) ; et
un programme informatique (903) stocké dans la mémoire (901) et pouvant être exécuté dans le processeur (902) ;
dans lequel, lors de l'exécution du programme (903), le processeur (902) met en oeuvre le procédé pour mettre en oeuvre une commande de conférence selon l'une quelconque des revendications 8-10.

13. Support de stockage lisible par ordinateur, **caractérisé par** le stockage d'une instruction exécutable par ordinateur pour mettre en oeuvre le procédé pour mettre en oeuvre une commande de conférence selon l'une quelconque des revendications 1-10.
